# EUROPÄISCHE PATENTSCHRIFT

(11) **EP 2 349 528 B1**
(45) Veröffentlichungstag und Bekanntmachung des Hinweises auf die Patenterteilung: **26.12.2012**
(21) Anmeldenummer: 09783542.5
(22) Anmeldetag: 29.09.2009
(51) Int. Cl.: B01D 46/02, B01D 46/24, B01D 50/00, B01D 46/00

(54) **VERFAHREN UND VORRICHTUNG ZUM ABTRENNEN VON PARTIKELFÖRMIGEN FESTSTOFFEN VON EINEM GASSTROM**
METHOD AND DEVICE FOR SEPARATING PARTICULATE SOLIDS FROM A GAS FLOW
PROCÉDÉ ET DISPOSITIF POUR SÉPARER D'UN COURANT GAZEUX DES MATIÈRES SOLIDES PARTICULAIRES

(30) Priorität: 23.10.2008 AT 16592008
(43) Veröffentlichungstag der Anmeldung: 03.08.2011
(73) Patentinhaber: Siemens VAI Metals Technologies GmbH, 4031 Linz (AT)
(72) Erfinder: EDER, Thomas, A-4050 Traun (AT); MILLNER, Robert, A-3382 Loosdorf (AT); REIN, Norbert, A-1060 Wien (AT); SCHENK, Johannes, Leopold, A-4040 Linz (AT)
(74) Vertreter: Maier, Daniel Oliver
(86) Internationale Anmeldenummer: PCT/EP2009/062605
(87) Internationale Veröffentlichungsnummer: WO 2010/046210

(56) Entgegenhaltungen:
- EP-A- 0 299 898
- DE-A1- 2 901 656
- DE-A1- 3 114 068
- DE-A1- 3 925 818

## Beschreibung

Die Erfindung betrifft eine Vorrichtung zum Abtrennen von partikelförmigen Feststoffen von einem Gasstrom, insbesondere einem Trägergasstrom zum Transport der partikelförmigen Feststoffe, mit zumindest einer Transportleitung, die in einen Abtrennraum mündet, einem angeschlossenen Trockenfilter zur Abtrennung von Stäuben und/oder feinpartikelförmigen Feststoffen mit einer Abführleitung zum Ableiten des gereinigten Gasstromes und einem Speicherbehälter zur Aufnahme der abgetrennten partikelförmigen Feststoffe.

Die Erfindung betrifft weiters ein Verfahren zum Abtrennen von partikelförmigen Feststoffen von einem Gasstrom, insbesondere einem Trägergasstrom zum Transport der partikelförmigen Feststoffe.

Es ist aus dem Stand der Technik bekannt, dass Transportgas, das zum pneumatischen Transport von partikelförmigen Feststoffen dient, nach dem Abtrennen der transportierten Feststoffe mittels eines Heißzyklones und in weiterer Folge mittels eines Nasswäschers gereinigt wird. Nachteilig ist dabei, dass es neben dem hohen Verbrauch an Wasser auch zu einem großen Anfall an Schlämmen kommt, die nur durch aufwändige Verfahren wieder einer Verwertung zugeführt werden können.

Aus der JP 05-076803 A ist es bekannt einen Filter in einem Zyklon anzuordnen, wobei nach einer Grobabscheidung im Zyklon eine Feinabscheidung im Filter erfolgt. Das dabei abgeschiedene Material kann weiter verarbeitet werden.

Ebenso zeigt die WO 94/11283 Stäube von einem Fördergas zu trennen und die dabei abgeschiedenen Stäube einem offenen Gefäß zuzuführen bzw. das Fördergas im Zyklon und einem Sackfilter zu reinigen.

Es ist daher eine Aufgabe der Erfindung ein Verfahren und eine Vorrichtung zur Verfügung zu stellen, die die Reinigung eines Gasstromes sicher und kostengünstiger ermöglichen sowie eine einfache stoffliche Nutzung und Weiterverarbeitung des Staubes erlauben.

Diese Aufgabe wird durch die erfindungsgemäße Vorrichtung nach Anspruch 1 und durch das erfindungsgemäße Verfahren nach Anspruch 9 gelöst.

Durch die erfindungsgemäße Vorrichtung wird ein pneumatischer Transport von partikelförmigen Feststoffen mittels eines Gasstroms und die Reinigung des Gasstromes nach der Abtrennung der partikelförmigen Feststoffe kombiniert und eine wesentlich einfachere Vorrichtung vorgeschlagen. Die Mischung aus Gasstrom und partikelförmigen Feststoffen gelangt zunächst, insbesondere tangential, in den Abtrennraum, sodass die partikelförmigen Feststoffe aufgrund von Schwerkraft weitgehend abgetrennt werden und nur mehr Stäube oder auch feinpartikelförmige Feststoffe in den Trockenfilter gelangen und dort abgeschieden werden. Der Abtrennraum ist dabei derart ausgebildet, dass die Abtrennung nicht nur aufgrund von Schwerkraft, sondern auch aufgrund der tangentiellen Strömung, ähnlich wie in einem Zyklon, erfolgt.

Aufgrund der großen Mengen an Stäuben und feinpartikelförmigen Feststoffen, die sich in Prozessgasen der Reduktionsmetallurgie, wie z.B. bei der Direktreduktion von Eisenerzen, ergeben, müssen Reinigungseinrichtungen für solche Gase derart ausgelegt werden, dass auch diese sehr großen Mengen sicher verarbeitet werden können. Um eine sichere Funktion zu gewährleisten, weist der Trockenfilter Rückspüleinrichtungen zum Abtrennen des Filterkuchens vom Trockenfilter auf. Dabei steht der Trockenfilter mit dem Speicherbehälter derart in Verbindung, dass der Filterkuchen in den Speicherbehälter gelangt. Durch das Rückspülen der Filtereinrichtung kann der Filter gereinigt und somit wieder in den anfänglichen Betriebszustand versetzt werden, wobei die am Filter abgelagerten Feststoffe als Filterkuchen vom Trockenfilter entfernt und in den Speicherbehälter eingebracht werden kann. Somit ist es nicht mehr nötig den Filterkuchen auszuschleusen und einer gesonderten Verwertung oder einer gesonderten Aufbereitung zuzuführen.

Der Speicherbehälter ist ein Chargierbehälter, zum Chargieren der partikelförmigen Feststoffe und/oder des Filterkuchens in eine Kompaktiereinrichtung, insbesondere eine Agglomeriereinrichtung, oder in ein metallurgisches Aggregat, insbesondere ein Schmelzaggregat, zur Verarbeitung der partikelförmigen Feststoffe. Damit ist es möglich die partikelförmigen Einsatzstoffe direkt aus der Transportleitung in den Abtrennraum und in den Speicherbehälter einzubringen, wobei kein Kontakt mit umgebender Atmosphäre erfolgt. Damit ist eine direkte Weiterverarbeitung, gegebenenfalls nach einer vorhergehenden Kompaktierung möglich, sodass z.B. gesonderte Einrichtungen zum Transport oder zur Lagerung der partikelförmigen Feststoffe nicht mehr nötig sind.

Da die oftmals heißen partikelförmigen Feststoffe und der heiße Filterkuchen keinen Kontakt mit der Atmosphäre haben, sondern nur mit dem Gasstrom, kommt es auch nicht zu ungewollten Oxidationsvorgängen z.B. an Luft.

Gemäß einer vorteilhaften Ausgestaltung der erfindungsgemäßen Vorrichtung weist die Transportleitung einen Regler und/oder ein Ventil, insbesondere ein Auf-/Zu-Ventil, zur Regelung des Volumenstroms bzw. der Zeitdauer des Gasstroms und der darin enthaltenen partikelförmigen Feststoffe auf. Um einen optimalen Betrieb der Vorrichtung sicherstellen zu können, ist es nötig den Volumenstrom bzw. die Öffnungszeiten zu regeln bzw. in einem Regelbereich oder Zeitbereich zu halten.

Nach einer besonders vorteilhaften Ausgestaltung der erfindungsgemäßen Vorrichtung ist der Trockenfilter auf den Speicherbehälter aufgesetzt ist, wobei der Abtrennraum durch den Speicherbehälter gebildet wird. Dies ermöglicht eine sehr kompakte Vorrichtung, sodass gesonderte Einrichtungen zum Transport des Filterkuchens in den Speicherbehälter entfallen können.

Erfindungsgemäß ist der Trockenfilter neben dem Speicherbehälter angeordnet, wobei der Abtrennraum durch den unteren Teil des Trockenfilters gebildet wird. Diese spezielle Ausgestaltung kann z.B. bei einem nachträglichen Einbau der erfindungsgemäßen Vorrichtung oder auch bei beengten Platzverhältnissen vorteilhaft sein.

Nach einer weiteren Ausgestaltung der erfindungsgemäßen Vorrichtung weist der Trockenfilter eine Ableitung zum Abtransport der abgetrennten partikelförmigen Feststoffe und/oder des Filterkuchens in den Speicherbehälter auf. Damit wird bei einer Anordnung des Trockenfilters neben dem Speicherbehälter eine Rückführung des Filterkuchens in den Speicherbehälter ermöglicht, sodass der Filterkuchen gemeinsam mit den partikelförmigen Feststoffen einer weiteren Verarbeitung zugeführt werden kann.

Gemäß einer geeigneten Ausgestaltung der erfindungsgemäßen Vorrichtung ist der Trockenfilter ein gesinterter poröser Metallfilter, ein Keramikfilter oder ein Sackfilter. Derartige Filter zeichnen sich durch hohe zulässige Betriebstemperaturen aus, sodass keine aufwändigen Kühleinrichtungen und damit kein hoher Energiebedarf nötig sind.

Nach einer weiteren, bevorzugten Ausgestaltung der erfindungsgemäßen Vorrichtung weist der Speicherbehälter Anschlüsse zum Spülen der partikelförmigen Feststoffe und/oder des Filterkuchens mit Inertgas, insbesondere Stickstoff, auf. Das Spülen mit Inertgas stellt sicher, dass die partikelförmigen Feststoffe, insbesondere wenn sie noch höhere Temperaturen aufweisen, nicht oxidieren und führt zu einer Verbesserung des Fließverhaltens der partikelförmigen Feststoffe und des Filterkuchens.

Erfindungsgemäß sind Impulsleitungen und Druckmesseinrichtungen zum Messen der Drücke vor und nach dem Trockenfilter bzw. zur Ermittlung eines Differenzdrucks vorgesehen, wobei der Differenzdruck einem Regler zugeführt und zur Steuerung der Rückspüleinrichtung herangezogen wird. Über den Differenzdruck kann mittels des Reglers die Rückspülung des Trockenfilters geregelt bzw. eingeleitet werden, sodass der Trockenfilter in den anfänglichen Betriebszustand rückversetzt wird und Fehlfunktionen des Filters ausgeschlossen werden.

Nach einer weiteren Ausgestaltung der erfindungsgemäßen Vorrichtung ist ein Regler zur Regelung einer wechselweisen Zufuhr der partikelförmigen Feststoffe mittels des Gasstroms und der Zufuhr von Rückspülgas vorgesehen. Mittels des Reglers können die verschiedenen Betriebszustände eingeleitet werden.

Das erfindungsgemäße Verfahren dient zum Abtrennen von partikelförmigen Feststoffen von einem Gasstrom, insbesondere einem Trägergasstrom zum Transport partikelförmiger Feststoffe. Der Gastrom wird mittels einer Transportleitung zunächst in einen Abtrennraum eingeleitet, wo es aufgrund von Schwerkraft zu einer zumindest teilweisen Abscheidung der partikelförmigen Feststoffe kommt. In weiterer Folge wird der nunmehr zumindest teilweise gereinigte Gasstrom einem angeschlossenen Trockenfilter zur Abtrennung der verbliebenen staub- und/oder feinpartikelförmigen Feststoffe zugeführt, wobei der gereinigte Gasstrom mittels einer Abführleitung aus dem Trockenfilter abgeleitet und die abgetrennten partikelförmigen Feststoffe einem Speicherbehälter zugeführt werden. Durch das erfindungsgemäße Verfahren erübrigen sich nasse Filterverfahren vollkommen. Die am Filter abgelagerten staub- oder feinpartikelförmigen Feststoffe verbleiben im Verfahren, da sie zu den partikelförmigen Feststoffen hinzugefügt werden, wobei dies in einem Speicherbehälter unter einer speziellen, zumeist nichtoxidierenden Atmosphäre gehalten werden können. Somit kann der Filterkuchen ohne weitere Maßnahmen gemeinsam mit den partikelförmigen Feststoffen weiterverarbeitet werden. Zusätzliche Aufbereitungsmaßnahmen für den Filterkuchen erübrigen sich damit vollständig.

Die partikelförmigen Feststoffe und/oder der Filterkuchen werden/wird einer Kompaktiereinrichtung, insbesondere einer Agglomeriereinrichtung, und/oder einem metallurgischen Aggregat, insbesondere einem Schmelzaggregat, zur Verarbeitung der partikelförmigen Feststoffe und/oder des Filterkuchens zugeführt. Durch diese Maßnahme werden die partikelförmigen Feststoffe und der Filterkuchen gemeinsam weiter verarbeitet, sodass z.B. Agglomerate für eine nachfolgende Prozessstufe hergestellt werden können. Vorteilhaft ist dabei, dass keine gesonderte Verarbeitung des Filterkuchens nötig wird und somit auch dieser Wertstoff einer Verwertung zugeführt werden kann. Alternativ ist es auch möglich die partikelförmigen Feststoffe und den Filterkuchen direkt oder die Agglomerate einem Schmelzaggregat zuzuführen und diese z.B. zu Roheisen oder Stahlvorprodukten zu erschmelzen.

Gemäß einer speziellen Ausgestaltung des erfindungsgemäßen Verfahrens wird ein Rückspülgas, insbesondere Stickstoff, unter Druck, insbesondere 3 bis 6 bar, mittels Rückspüleinrichtungen zum Entfernen des Filterkuchens in den Trockenfilter eingeleitet, wobei der entfernte Filterkuchen dem Speicherbehälter zugeführt. Die Spülung des Filters mittels Rückspülgas zielt auf eine weitgehende Reinigung der Filterelemente, wie z.B. der Filterkerzen, ab, wobei das Spülgas auch zur Einstellung bzw. Aufrechterhaltung einer nichtoxidierenden Atmosphäre im Trockenfilter, in der Abtrennkammer und in dem Speicherbehälter herangezogen werden kann. Das Spülgas bzw. der Druck des Spülgases können nach Bedarf variiert werden, wobei als Spülgase neben Stickstoff auch andere nichtoxidierende Gase, wie z.B. Prozessgase aus metallurgischen Prozessen Einsatz finden können.

Nach einer besonderen Ausgestaltung des erfindungsgemäßen Verfahrens wird während der Abreinigungsphase, beginnend mit dem Zeitpunkt ab dem das Spülgas in den Trockenfilter eingeleitet wird, die Zufuhr des Gasstroms und der partikelförmigen Feststoffe mittels eines Reglers und/oder einem Ventil gesperrt. Diese Maßnahme stellt sicher, dass der Gegenstrom des nach unten fallenden abgelösten Filterkuchens und des nach oben strömenden Gases im Trockenfilter minimiert wird. Durch den Regler können die Spülphasen entsprechend getaktet bzw. bei Bedarf angepasst werden, wobei auf Druckmessungen im Trockenfilter zurückgegriffen werden kann.

Eine spezielle Ausgestaltung des erfindungsgemäßen Verfahrens sieht vor, dass die partikelförmigen Feststoffe, insbesondere feinpartikelförmiges, zumindest zum Teil reduziertes Eisen, Eisenagglomerate oder Eisenschwamm sind. Derartige eisenhältige Stoffe dienen in der Roheisen bzw. Stahlproduktion als Vorprodukte. Zumeist werden aufeinander folgende Prozessschritte wie die Reduktion dieser Stoffe unmittelbar mit einem Schmelzprozess verbunden, sodass eine Verarbeitung der noch warmen eisenhältigen Stoffe angestrebt wird. Um eine neuerliche Oxidation der bereits zumindest teilweise reduzierten eisenhältigen Stoffe zu vermeiden, werden derartige Stoffe häufig unter nichtoxidierenden Atmosphären transportiert bzw. auch gelagert oder aber einer Brikettierung bzw. Kompaktierung zugeführt.

Eine vorteilhafte Ausgestaltung des erfindungsgemäßen Verfahrens sieht vor, dass der Gasstrom aus Reduktionsgas und/oder Stickstoff bzw. einer Mischung davon gebildet wird. Durch die Verwendung von Prozessgas aus der Direktreduktion kann einerseits dessen Wärmeinhalt, andererseits auch dessen Eigenschaft als reduzierendes Gas genutzt werden. Alternativ kann bei Bedarf auch Stickstoff in den Gasstrom zugemischt und die Gasmenge im Gasstrom bzw. der Druck angepasst werden.

Eine besonders vorteilhafte Ausgestaltung des erfindungsgemäßen Verfahrens sieht vor, ein Differenzdruck am Trockenfilter gemessen und dass bei Überschreiten eines vordefinierten Differenzdruckniveaus das Rückspülen des Trockenfilters mittels eines Reglers eingeleitet wird. Durch die Regelung kann einerseits der optimale Betriebszustand und damit die durch den Trockenfilter strömende Gasmenge eingestellt werden, sodass die Abscheidung am Trockenfilter bzw. die Betriebsdauer zwischen den Rückspülungen maximiert werden können. Weiters kann über den Differenzdruck festgestellt werden, wann eine Spülung zur Reinigung des Trockenfilters erfolgen muss. Eine geeignete Ausgestaltung des erfindungsgemäßen Verfahrens sieht vor, dass die Zufuhr der partikelförmigen Feststoffe mittels des Gasstroms diskontinuierlich, insbesondere zyklisch, und geregelt abwechselnd mit dem Abreinigungszyklus beginnend mit der Zufuhr von Spülgas erfolgt. Damit kann sichergestellt werden, dass der Trockenfilter regelmäßig gereinigt und somit die Funktion des Trockenfilters stets gesichert werden kann. Während des Spülens des Filters wird bevorzugterweise die Zufuhr der partikelförmigen Feststoffe und des Gasstroms unterbrochen, sodass der Druck des Spülgases mit etwa 3 bis 6 bar zu einer vollständigen Reinigung des Trockenfilters führt.

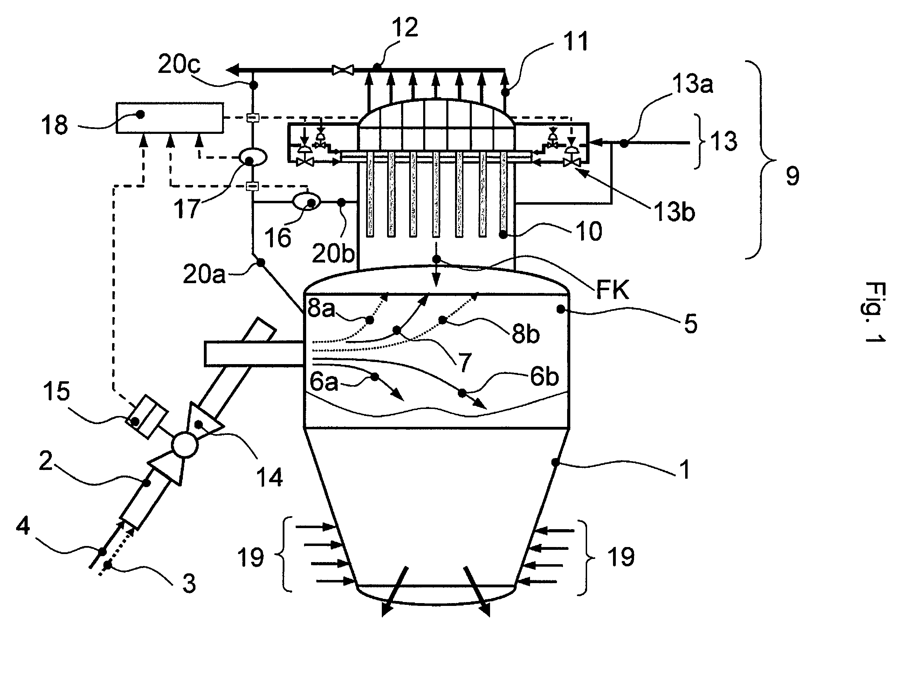

Fig. 1: Erfindungsgemäßer Trockenfilter in einer speziellen Anordnung direkt über einem Speicherbehälter für partikelförmige Feststoffe

Figur 1 zeigt einen Speicherbehälter 1 für partikelförmige Feststoffe, die häufig für die Zwischenspeicherung z.B. von direkt reduzierten, partikelförmigen Eisenerzen Einsatz findet. Dieser Speicherbehälter 1 kann z.B. mit einer nicht dargestellten Agglomeriereinrichtung und/oder einem ebenfalls nicht dargestellten Schmelzaggregat verbunden werden. Über eine Transportleitung 2 werden mittels eines Trägergasstroms 3 partikelförmige Feststoffe 4 in einen Abtrennraum 5 eingebracht. Die Transportgasleitung 2 mündet derart in den Abtrennraum 5, dass der Gasstrom oder Trägergasstrom 3 und die partikelförmigen Feststoffe 4 tangentiell eingebracht werden, wobei aufgrund von Fliehkraft eine zusätzliche Abscheidung erzielt wird, ähnlich einem Zyklon.

In der speziellen Ausgestaltung nach Fig. 1 wird der Abtrennraum 5 durch den oberen Bereich des Speicherbehälters 1 gebildet. Der einströmende Gasstrom 3 und die partikelförmigen Feststoffe trennen sich im Abtrennraum 5 weitgehend, wobei ein Großteil der partikelförmigen Feststoffe 6a und 6b aufgrund von Schwerkraft in den Speicherbehälter 1 abgelagert wird. Insbesondere Stäube oder auch feinpartikelförmige Feststoffe 7 werden mit dem Gasstrom 8a und 8b mit in den Trockenfilter 9 gerissen und scheiden sich an den Filterelementen, im gezeigten Beispiel an einer Vielzahl an Filterkerzen 10 ab. Der gereinigte Gasstrom wird über Rohre 11 einer oder mehreren Abführleitungen 12 aus dem Trockenfilter abgeleitet und kann als gereinigtes Gas einer weiteren Verwendung zugeführt werden.

Der Trockenfilter 9 weist Rückspüleinrichtungen 13, 13a, 13b auf, mit denen Spülgas unter Überdruck von etwa 6 bar entgegen der Strömungsrichtung des Gasstroms in den Trockenfilter eingeleitet werden kann, wobei die abgeschiedenen Stäube und feinpartikelförmige Feststoffe, die den Filterkuchen FK bilden, von den Filterkerzen 10 wiederum abgetragen und in den Speicherbehälter 1 verbracht werden können. Die Rückspüleinrichtung kann als Ringleitung mit einer Vielzahl an Einleitungen 13a und entsprechenden Absperrventilen 13b ausgebildet sein.

In der Zuleitung 2 ist ein Ventil 14 mit einer Betätigungseinrichtung 15 vorgesehen, sodass die Zufuhr des Gasstroms und der partikelförmigen Feststoffe durch Öffnen und Schließen gesteuert werden kann. Üblicherweise wird das Ventil 14 mittels der Betätigungseinrichtung 15 immer nur kurz geöffnet und die nötige Menge an partikelförmigen Feststoffen eingefördert. Alternativ wäre auch eine weitgehend kontinuierliche Förderung mit kurzen Unterbrechungen denkbar.

Um den aktuellen Betriebszustand des Trockenfilters 9 sicher erfassen zu können, sind Impulsleitungen 20a, 20b, 20c und Druck bzw. Differenzdruckmesseinrichtungen 16, 17 und ein Regler 18 vorgesehen, sodass das Rückspülen des Trockenfilters 9 aufgrund des gemessenen Differenzdrucks bzw. unter Berücksichtigung weiterer Parameter erfolgen kann. Der Regler kann dabei auch den Schaltzustand des Ventils 14 berücksichtigen bzw. dieses über die Betätigungseinrichtung 15 auch steuern.

Zur Verbesserung des Fließverhaltens der partikelförmigen Feststoffe und des Filterkuchens im Speicheraggregat 1 können auch Anschlüsse 19 zum Spülen der partikelförmigen Feststoffe und des Filterkuchens mit Inertgas, insbesondere Stickstoff vorgesehen werden.

### Bezugszeichenliste

- 1: Speicherbehälter
- 2: Transportleitung
- 3: Gasstrom oder Trägergasstrom
- 4: partikelförmige Feststoffe
- 5: Abtrennraum
- 6a, 6b: Feststoffe
- 7: Stäube, feinpartikelförmige Feststoffe
- 8a, 8b: Gasstrom
- 9: Trockenfilter
- 10: Filterkerzen
- 11: Rohre
- 12: Abführleitung
- 13: Rückspüleinrichtungen
- 13a: Einleitungen
- 13b: Absperrventilen
- 14: Ventil
- 15: Betätigungseinrichtung
- 16, 17: Druck- bzw. Differenzdruckmesseinrichtungen
- 18: Regler
- 19: Anschlüsse zum Spülen
- 20a, 20b, 20c: Impulsleitungen

## Patentansprüche

1. Vorrichtung zum Abtrennen von partikelförmigen Feststoffen von einem Trägergasstrom (3) zum Transport der partikelförmigen Feststoffe (4), mit zumindest einer Transportleitung (2), die tangential in einen Abtrennraum (5) mündet, einem angeschlossenen Trockenfilter (9) zur Abtrennung von Stäuben und/oder feinpartikelförmigen Feststoffen mit einer Abführleitung (12) zum Ableiten des gereinigten Gasstromes und einem Speicherbehälter (1) zur Aufnahme der abgetrennten partikelförmigen Feststoffe wobei der Trockenfilter (9) Rückspüleinrichtungen (13, 13a, 13b) zum Abtrennen des Filterkuchens vom Trockenfilter (9) aufweist, **dadurch gekennzeichnet, dass** der Trockenfilter (9) mit dem Speicherbehälter (1) derart in Verbindung steht, dass der Filterkuchen in den Speicherbehälter (1) gelangt, wobei der Speicherbehälter (1) ein Chargierbehälter zum Chargieren der partikelförmigen Feststoffe und/oder des Filterkuchens in eine Agglomeriereinrichtung oder in ein Schmelzaggregat zur Verarbeitung der partikelförmigen Feststoffe ist, wobei der Abtrennraum derart ausgebildet ist, dass die Abtrennung nicht nur aufgrund von Schwerkraft, sondern auch aufgrund der tangentiellen Strömung, ähnlich wie in einem Zyklon, erfolgt und wobei der Trägergasstrom aus Prozessgas aus einer Direktreduktion besteht, wobei in dem Speicherbehälter (1) Anschlüsse (19) zum Spülen der partikelförmigen Feststoffe und des Filterkuchens mit Inertgas vorgesehen sind.

2. Vorrichtung nach Anspruch 1, **dadurch gekennzeichnet, dass** die Transportleitung (2) einen Regler (18) und/oder ein Ventil (14), insbesondere ein Auf-/Zu-Ventil, zur Regelung des Volumenstroms bzw. der Zeitdauer des Gasstroms (3) und der darin enthaltenen partikelförmigen Feststoffe (4) aufweist.

3. Vorrichtung nach Anspruch 1 oder 2, **dadurch gekennzeichnet, dass** der Trockenfilter (9) auf den Speicherbehälter (1) aufgesetzt ist, wobei der Abtrennraum (5) durch den Speicherbehälter (1) gebildet wird.

4. Vorrichtung nach einem der Ansprüche 1 - 2, **dadurch gekennzeichnet, dass** der Trockenfilter (9) neben dem Speicherbehälter (1) angeordnet ist, wobei der Abtrennraum (5) durch den unteren Teil des Trockenfilters (9) gebildet wird.

5. Vorrichtung nach Anspruch 4, **dadurch gekennzeichnet, dass** der Trockenfilter (9) eine Ableitung zum Abtransport der abgetrennten partikelförmigen Feststoffe und/oder des Filterkuchens in den Speicherbehälter (1) aufweist.

6. Vorrichtung nach einem der Ansprüche 1 - 5, **dadurch gekennzeichnet, dass** der Trockenfilter (9) ein gesinterter poröser Metallfilter, ein Keramikfilter oder ein Sackfilter ist.

7. Vorrichtung nach einem der Ansprüche 1 - 6, **dadurch gekennzeichnet, dass** Impulsleitungen (20a, 20b, 20c) und Druckmesseinrichtungen (16, 17) zum Messen der Drücke vor und nach dem Trockenfilter (9) bzw. zur Ermittlung eines Differenzdrucks vorgesehen sind, wobei der Differenzdruck einem Regler (18) zugeführt und zur Steuerung der Rückspüleinrichtung (13, 13a, 13b) herangezogen wird.

8. Vorrichtung nach einem der Ansprüche 1 - 7, **dadurch gekennzeichnet, dass** ein Regler (18) zur Regelung einer wechselweisen Zufuhr der partikelförmigen Feststoffe (4) mittels des Gasstroms (3) und der Zufuhr von Spülgas vorgesehen ist.

9. Verfahren zum Abtrennen von partikelförmigen Feststoffen von einem Trägergasstrom zum Transport partikelförmiger Feststoffe, wobei diese eisenhältige Vorprodukte für die Roheisen bzw. Stahlproduktion sind, **dadurch gekennzeichnet, dass** der Gastrom aus nichtoxidierendem Prozessgas aus einer Direktreduktion gebildet und mittels einer Transportleitung zunächst in einen Abtrennraum eingeleitet wird, wo es aufgrund von Schwerkraft zu einer zumindest teilweisen Abscheidung der partikelförmigen Feststoffe kommt, wobei der Abtrennraum derart ausgebildet ist, dass die Abtrennung auch aufgrund einer sich tangentiell ausbildenden Strömung, ähnlich wie in einem Zyklon, erfolgt und in weiterer Folge der zumindest teilweise gereinigte Gasstrom einem angeschlossenen Trockenfilter zur Abtrennung der verbliebenen staub- und/oder feinpartikelförmigen Feststoffe zugeführt wird, wobei der gereinigte Gasstrom mittels einer Abführleitung aus dem Trockenfilter abgeleitet und die abgetrennten partikelförmigen Feststoffe einem Speicherbehälter zugeführt werden, wobei der Filterkuchen durch ein nichtoxidierendes Rückspülgas vom Filter abgetrennt und dem Speicherbehälter zugeführt wird, wobei die partikelförmigen Feststoffe und/oder der Filterkuchen über Anschlüsse im Speicherbehälter mit Inertgas gespült und aus dem Speicherbehälter in eine Agglomeriereinrichtung und/oder ein Schmelzaggregat zur Verarbeitung der partikelförmigen Feststoffe und/oder des Filterkuchens chargiert werden.

10. Verfahren nach Anspruch 9, **dadurch gekennzeichnet, dass** ein Rückspülgas, insbesondere Stickstoff, unter Druck, insbesondere 3 bis 6 bar, mittels Rückspüleinrichtungen zum Entfernen des Filterkuchens in den Trockenfilter eingeleitet wird, wobei der entfernte Filterkuchen dem Speicherbehälter zugeführt wird.

11. Verfahren nach Anspruch 9 oder 10, **dadurch gekennzeichnet, dass** während der Abreinigungsphase, beginnend mit dem Zeitpunkt ab dem das Spülgas in den Trockenfilter eingeleitet wird, die Zufuhr des Gasstroms und der partikelförmigen Feststoffe mittels eines Reglers und/oder einem Ventil gesperrt wird.

12. Verfahren nach einem der Ansprüche 9 - 11, **dadurch gekennzeichnet, dass** die partikelförmigen Feststoffe, insbesondere feinpartikelförmiges, zumindest zum Teil reduziertes Eisen, Eisenagglomerate oder Eisenschwamm sind.

13. Verfahren nach einem der Ansprüche 9 - 12, **dadurch gekennzeichnet, dass** der Gasstrom aus Reduktionsgas und/oder Stickstoff bzw. einer Mischung davon gebildet wird.

14. Verfahren nach einem der Ansprüche 9 - 13, **dadurch gekennzeichnet, dass** ein Differenzdruck am Trockenfilter gemessen und dass bei Überschreiten eines vordefinierten Differenzdruckniveaus das Rückspülen des Trockenfilters mittels eines Reglers eingeleitet wird.

15. Verfahren nach einem der Ansprüche 9 - 14, **dadurch gekennzeichnet, dass** die Zufuhr der partikelförmigen Feststoffe mittels des Gasstroms diskontinuierlich, insbesondere zyklisch, und geregelt abwechselnd mit dem Abreinigungszyklus beginnend mit der Zufuhr von Spülgas erfolgt.

## Claims

1. Apparatus for separating particulate solids from a carrier gas stream (3) for transporting the particulate solids (4), comprising at least one transport line (2) which issues tangentially into a separating chamber (5), a connected dry filter (9) for separating dusts and/or finely particulate solids, with a discharge line (12) for discharging the cleaned gas stream, and a storage container (1) for holding the separated particulate solids, wherein the dry filter (9) comprises backwashing devices (13, 13a, 13b) for separating the filter cake from the dry filter (9), **characterized in that** the dry filter (9) is connected to the storage container (1) in such a manner that the filter cake passes into the storage container (1), wherein the storage container (1) is a charging container for charging the particulate solids and/or the filter cake into an agglomerating device or into a melting unit for processing the particulate solids, wherein the separating chamber is designed in such a manner that the separation takes place not only owing to gravitational force, but also owing to the tangential flow, in a manner similar to that in a cyclone, and wherein the carrier gas stream consists of process gas from a direct reduction, wherein ports (19) for purging the particulate solids and the filter cake with inert gas are provided in the storage container (1).

2. Apparatus according to Claim 1, **characterized in that** the transport line (2) has a controller (18) and/or a valve (14), in particular an on/off valve, for controlling the volumetric flow or the duration of the gas stream (3) and of the particulate solids (4) present therein.

3. Apparatus according to Claim 1 or 2, **characterized in that** the dry filter (9) is positioned on the storage container (1), wherein the separating chamber (5) is formed by the storage container (1).

4. Apparatus according to either of Claims 1-2, **characterized in that** the dry filter (9) is arranged alongside the storage container (1), wherein the separating chamber (5) is formed by the lower part of the dry filter (9).

5. Apparatus according to Claim 4, **characterized in that** the dry filter (9) has a discharge line for transporting the separated particulate solids and/or the filter cake away into the storage container (1).

6. Apparatus according to one of Claims 1-5, **characterized in that** the dry filter (9) is a sintered porous metal filter, a ceramic filter or a bag filter.

7. Apparatus according to one of Claims 1-6, **characterized in that** pulse lines (20a, 20b, 20c) and pressure measurement devices (16, 17) for measuring the pressures upstream and downstream of the dry filter (9) or for determining a differential pressure are provided, wherein the differential pressure is supplied to a controller (18) and used to control the backwashing device (13, 13a, 13b).

8. Apparatus according to one of Claims 1-7, **characterized in that** a controller (18) for controlling an alternate supply of the particulate solids (4) by means of the gas stream (3) and the supply of purge gas is provided.

9. Method for separating particulate solids from a carrier gas stream for transporting particulate solids, wherein these solids are iron-containing primary products for the production of pig iron and steel, **characterized in that** the gas stream is formed from non-oxidizing process gas from a direct reduction and is initially fed by means of a transport line into a separating chamber, where at least partial separation of the particulate solids takes place owing to gravitational force, wherein the separating chamber is designed in such a manner that the separation also takes place owing to a tangentially forming flow, in a manner similar to that in a cyclone, and then the at least partially cleaned gas stream is supplied to a connected dry filter for separating the remaining solids in dust and/or finely particulate form, wherein the cleaned gas stream is discharged from the dry filter by means of a discharge line and the separated particulate solids are supplied to a storage container, wherein the filter cake is separated from the filter by a non-oxidizing backwashing gas and supplied to the storage container, wherein the particulate solids and/or the filter cake are purged with inert gas via ports in the storage container and charged from the storage container into an agglomerating device and/or a melting unit for processing the particulate solids and/or the filter cake.

10. Method according to Claim 9, **characterized in that** a backwashing gas, in particular nitrogen, is fed into the dry filter under pressure, in particular 3 to 6 bar, by means of backwashing devices in order to remove the filter cake, wherein the removed filter cake is supplied to the storage container.

11. Method according to Claim 9 or 10, **characterized in that**, during the cleaning phase, starting with the point in time from which the purge gas is fed into the dry filter, the supply of the gas stream and of the particulate solids is blocked by means of a controller and/or a valve.

12. Method according to one of Claims 9-11, **characterized in that** the particulate solids are at least partially reduced iron, iron agglomerates or sponge iron, in particular in finely particulate form.

13. Method according to one of Claims 9-12, **characterized in that** the gas stream is formed from reduction gas and/or nitrogen or a mixture thereof.

14. Method according to one of Claims 9-13, **characterized in that** a differential pressure is measured at the dry filter, and **in that** the backwashing of the dry filter is initiated by means of a controller if a predefined differential pressure level is exceeded.

15. Method according to one of Claims 9-14, **characterized in that** the particulate solids are supplied by means of the gas stream in a batchwise manner, in particular cyclically, and in a controlled manner alternating with the cleaning cycle starting with the supply of purge gas.

## Revendications

1. Dispositif pour séparer des matières solides particulaires d'un courant de gaz porteur (3) pour le transport des matières solides particulaires (4), comprenant au moins une conduite de transport (2), qui débouche tangentiellement dans une chambre de séparation (5), un filtre à sec raccordé (9) pour la séparation de poussières et/ou de matières solides particulaires fines avec une conduite d'évacuation (12) pour évacuer le courant de gaz épuré, et un réservoir d'accumulation (1) destiné à recevoir les matières solides particulaires séparées, dans lequel le filtre à sec (9) présente des dispositifs de balayage à contre-courant (13, 13a, 13b) pour la séparation du gâteau de filtre du filtre à sec (9), **caractérisé en ce que** le filtre à sec (9) est en communication avec le réservoir d'accumulation (1) de telle manière que le gâteau de filtre parvienne dans le réservoir d'accumulation (1), dans lequel le réservoir d'accumulation (1) est un réservoir de chargement pour charger les matières solides particulaires et/ou le gâteau de filtre dans une installation d'agglomération ou dans une unité de fusion pour le traitement des matières solides particulaires, dans lequel la chambre de séparation est configurée de telle manière que la séparation ne se produise pas seulement en raison de la gravité mais aussi en raison de l'écoulement tangentiel, comme dans un cyclone, et dans lequel le courant de gaz porteur se compose de gaz de traitement provenant d'une réduction directe, dans lequel il est prévu dans le réservoir d'accumulation (1) des raccords (19) pour le balayage des matières solides particulaires et du gâteau de filtre avec un gaz inerte.

2. Dispositif selon la revendication 1, **caractérisé en ce que** la conduite de transport (2) présente un régulateur (18) et/ou une soupape (14), en particulier une soupape tout ou rien, pour la régulation du courant volumique ou de la durée du courant de gaz (3) et des matières solides particulaires (4) contenues dans celui-ci.

3. Dispositif selon la revendication 1 ou 2, **caractérisé en ce que** le filtre à sec (9) est installé sur le réservoir d'accumulation (1), dans lequel la chambre de séparation (5) est formée par le réservoir d'accumulation (1).

4. Dispositif selon l'une quelconque des revendications 1 ou 2, **caractérisé en ce que** le filtre à sec (9) est disposé à côté du réservoir d'accumulation (1), dans lequel la chambre de séparation (5) est formée par la partie inférieure du filtre à sec (9).

5. Dispositif selon la revendication 4, **caractérisé en ce que** le filtre à sec (9) présente une conduite d'évacuation pour l'évacuation des matières solides particulaires séparées et/ou du gâteau de filtre dans le réservoir d'accumulation (1).

6. Dispositif selon l'une quelconque des revendications 1 à 5, **caractérisé en ce que** le filtre à sec (9) est un filtre métallique poreux fritté, un filtre céramique ou un filtre à sac.

7. Dispositif selon l'une quelconque des revendications 1 à 6, **caractérisé en ce qu'**il est prévu des conduites d'impulsion (20a, 20b, 20c) et des dispositifs de mesure de pression (16, 17) pour mesurer les pressions avant et après le filtre à sec (9) ou pour déterminer une différence de pression, dans lequel la différence de pression est communiquée à un régulateur (18) et utilisée pour la commande du dispositif de balayage à contre-courant (13, 13a, 13b).

8. Dispositif selon l'une quelconque des revendications 1 à 7, **caractérisé en ce qu'**il est prévu un régulateur (18) pour la régulation d'un envoi alterné des matières solides particulaires (4) au moyen du courant de gaz (3) et de l'envoi de gaz de balayage.

9. Procédé pour séparer des matières solides particulaires d'un courant de gaz porteur pour le transport de matières solides particulaires, dans lequel celles-ci sont des produits primaires contenant du fer pour la production de fonte ou d'acier, **caractérisé en ce que** l'on forme le courant de gaz à partir d'un gaz de traitement non oxydant provenant d'une réduction directe et on l'introduit d'abord, au moyen d'une conduite de transport, dans une chambre de séparation où il se produit, sous l'action de la gravité, une séparation au moins partielle des matières solides particulaires, dans lequel la chambre de séparation est configurée de telle manière que la séparation se produise aussi en raison de la formation d'un écoulement tangentiel, comme dans un cyclone, et dans la suite, on envoie le courant de gaz au moins partiellement épuré à un filtre à sec raccordé pour la séparation des matières solides poussiéreuses et/ou particulaires fines résiduelles, dans lequel on évacue le courant de gaz épuré hors du filtre à sec au moyen d'une conduite d'évacuation et on envoie les matières solides particulaires séparées à un réservoir d'accumulation, dans lequel on sépare le gâteau de filtre du filtre au moyen d'un gaz de balayage à contre-courant non oxydant et on l'envoie au réservoir d'accumulation, dans lequel on balaye les matières solides particulaires et/ou le gâteau de filtre avec un gaz inerte dans le réservoir d'accumulation via des raccords et on les charge, à partir du réservoir d'accumulation, dans une installation d'agglomération et/ou une unité de fusion pour le traitement des matières solides particulaires et/ou du gâteau de filtre.

10. Procédé selon la revendication 9, **caractérisé en ce que** l'on introduit un gaz de balayage à contre-courant, en particulier de l'azote, sous pression, en particulier 3 à 6 bar, au moyen de dispositifs de balayage à contre-courant dans le filtre à sec pour enlever le gâteau de filtre, dans lequel on envoie le gâteau de filtre enlevé au réservoir d'accumulation.

11. Procédé selon la revendication 9 ou 10, **caractérisé en ce que**, pendant la phase de nettoyage, qui commence à l'instant à partir duquel le gaz de balayage est introduit dans le filtre à sec, on ferme l'arrivée du courant de gaz et des matières solides particulaires au moyen d'un régulateur et/ou d'une soupape.

12. Procédé selon l'une quelconque des revendications 9 à 11, **caractérisé en ce que** les matières solides particulaires sont du fer au moins partiellement réduit, en particulier sous forme de particules fines, des agglomérés de fer ou de l'éponge de fer.

13. Procédé selon l'une quelconque des revendications 9 à 12, **caractérisé en ce que** le courant de gaz est formé de gaz de réduction et/ou d'azote ou d'un mélange de ceux-ci.

14. Procédé selon l'une quelconque des revendications 9 à 13, **caractérisé en ce que** l'on mesure une différence de pression au filtre à sec et **en ce que**, en cas de dépassement d'un niveau de différence de pression prédéfini, on lance le balayage à contre-courant du filtre à sec au moyen d'un régulateur.

15. Procédé selon l'une quelconque des revendications 9 à 14, **caractérisé en ce que** l'on opère l'apport des matières solides particulaires au moyen du courant de gaz de manière discontinue, en particulier cyclique, et en alternant régulièrement avec le cycle de nettoyage commençant avec l'envoi de gaz de balayage.
